# FASCICULE DE BREVET EUROPEEN

(11) **EP 3 886 276 B1**
(45) Date de publication et mention de la délivrance du brevet: **06.05.2026**
(21) Numéro de dépôt: 21164302.8
(22) Date de dépôt: 23.03.2021
(51) Int. Cl.: H02G 3/00, H02G 9/08, F16L 3/22, H02G 3/04, H02G 3/32

(54) **DISPOSITIF SUPPORT SOUS FORME DE POTENCE POUR CABLE ELECTRIQUE HAUTE TENSION**
HALTEVORRICHTUNG IN FORM EINES AUSLEGERS FÜR EIN ELEKTRISCHES HOCHSPANNUNGSKABEL
SUPPORT DEVICE IN THE FORM OF A JIB FOR HIGH-VOLTAGE POWER CABLE

(30) Priorité: 23.03.2020 FR 2002791
(43) Date de publication de la demande: 29.09.2021
(73) Titulaire: Commet Group, 57365 Ennery (FR)
(72) Inventeur: BUONVINO, Laurent, 57280 Maizières-lès-Metz (FR); JEUNECOURT, Lionel, 57640 Malroy (FR)
(74) Mandataire: Rhein, Alain

(56) Documents cités:
- EP-A1- 1 973 211
- EP-B1- 2 040 267
- DE-U1- 8 900 984
- JP-A- 2006 166 541
- JP-A- S5 851 716
- US-A- 4 032 096
- US-A- 4 960 253

## Description

L'invention concerne un dispositif support de câbles électriques haute tension, supérieure à 10 000 V, et plus particulièrement un dispositif support sous forme d'une potence.

La présente invention concerne le domaine du transport d'énergie électrique à haute tension et plus particulièrement un dispositif support de câbles électriques haute tension, notamment mis en œuvre dans des installations souterraines.

A ce propos, il est de plus en plus courant d'enfouir les lignes électriques à haute tension en évitant les infrastructures aériennes.

Aussi, ces lignes électriques haute tension sont amenées à cheminer le long de galeries souterraines ou dans des caniveaux techniques adaptés.

Précisément, dans de tels caniveaux techniques ou dans ces galeries, les câbles électriques de forte section reposent sur des dispositifs support adaptés.

Tout comme pour les infrastructures aériennes, en cas d'endommagement d'un tel câble électrique haute tension, et donc de court-circuit, il convient d'éviter la formation d'arcs électriques. En effet, en raison de la puissance électrique disponible, de tels arcs électriques créent des dégradations importantes susceptibles, très vite, de se propager et d'être à l'origine d'incendie dont les conséquences sont aggravées dans l'espace confinée d'une galerie souterraine.

Dans une forme de réalisation simplifiée, de tels dispositifs supports s'apparentent à une potence comprenant un bras support sur lequel peuvent venir reposer un ou plusieurs câbles électriques haute tension. Ce bras support est solidarisé à une platine de fixation apte à être fixée contre un mur par l'intermédiaire de moyens de scellement adaptés.

Très fréquemment, de telles potences sont conçues en acier, tenant compte du poids de ces câbles électriques de lignes haute tension et des contraintes que ces derniers sont susceptibles d'appliquer sur ces potences sous l'effet de chocs électriques, dilatations ou autres.

De manière à éviter les problèmes précités, ces potences en acier sont raccordées à la terre par l'intermédiaire d'une tresse en cuivre de section adaptée. Ainsi, en cas de court-circuit, l'énergie dispensée peut s'écouler librement dans le sol.

Les problèmes essentiellement constatés concernant cette mise à la terre des potences consistent en ce qu'un défaut de contact, lié par exemple à une oxydation, peut empêcher cet écoulement normal de l'énergie vers le sol en cas de court-circuit. La formation d'arcs électriques destructeurs est alors inévitable.

On a encore pu constater que ces tresses de mise à la terre des potences sont tout simplement absentes, par exemple par suite d'un vol, un arrachement ou autre.

Evidemment, en cas de court-circuit, l'intensité de l'arc électrique produit conduit à la fusion du métal de la potence, lequel peut s'écouler sur les installations en contrebas, par exemple sur d'autres câbles électriques haute tension en dégradant leur gaine d'isolation pour provoquer une réaction en chaîne et le démarrage d'un feu dans ces caniveaux techniques ou galeries souterraines.

Il est d'ores et déjà connu de concevoir des potences pour câbles électriques haute tension en matériau synthétique, plus particulièrement en matériau composite diélectrique.

En raison des contraintes mécaniques particulièrement importantes et évoquées plus haut que peuvent subir de telles potences, le fait de les concevoir en matériau composite les rend particulièrement couteuse.

En effet, leur conception en matériau composite s'avère complexe lorsque l'on prend en compte que de telles potences peuvent être soumises à des efforts de flexion, torsion et autres.

C'est dans le cadre d'une première démarche inventive que l'on a imaginé concevoir des dispositif support de câbles électriques haute tension sous forme de potences en acier tout en évitant leur mise à la terre.

On connait une potence pour câbles électriques haute tension, comportant un bras support en acier rapporté par soudure sur une platine de fixation en acier.

Par ailleurs, le long du bras support sont ménagées des ouvertures pour le passage d'organes de fixation, tels que sangles, colliers, brides ou similaires, pour solidariser sur ce bras support un ou plusieurs câbles électriques haute tension.

Ces ouvertures s'étendent dans le sens longitudinal le long de ce bras support et sont essentiellement prévus pour le passage de vis au moyen desquelles une bride est susceptible de fixer solidement des câbles électriques haute tension sur une telle potence.

Or ces vis de fixation, souvent prémontées sur la potence en formant un berceau de retenu des câbles, peuvent abimer ces derniers au moment de leur pose sur ces potences, tenant compte notamment du poids de ces câbles.

De plus, ces vis de fixation, voire les brides sont conçues au moins en partie en métal pour résister au feu. Ce sont pour autant des éléments conducteurs de propagation d'arc électrique de court-circuit à proximité immédiate du ou des câbles.

On connait également par le document US 4 032 096, un dispositif support sous forme de potence pour câble électrique sous forme d'un profilé métallique en U replié en équerre comportant une aile horizontale définissant un bras support de câble et une aile verticale de fixation sur un montant. Le bras support comporte deux ailes parallèles verticales s'étendant en bordure longitudinale d'une paroi horizontale pourvue d'une série d'ouvertures de forme oblongue, s'étendant transversalement. Sur cette paroi horizontale est montée une pièce adaptatrice conçue en tôle pliée et en forme de berceau sur laquelle est destiné à reposer un câble électriques haute tension. Celui-ci peut être maintenu sur cette pièce adaptatrice au moyen d'une sangle.

Il est encore connu par le document JP 2006-166541 un dispositif support sous forme de potence pour câble électrique comportant un bras support défini par une plaque verticale soudée sur une plaque de fixation configurées pour être fixée sur un poteau sous forme d'un profil circulaire. Sur le chant supérieur de la plaque formant le bras support est engagé un cavalier en porcelaine formant dans sa partie supérieure un berceau de réception d'un câble.

Le document JP 58-51716, décrit un dispositif support sous forme de potence pour câble électrique conçue en résine renforcée de fibre de verre comportant un bras support de câble solidaire d'une plaque de fixation. Cette potence est surmoulée sur un insert renforcement métallique en T se situant à la jonction du bras support avec la plaque de fixation.

Ainsi, l'invention concerne un dispositif support sous forme de potence pour câbles électriques haute tension, supérieure à 10.000V, selon la revendication 1.

D'autres buts et avantages de la présente invention apparaîtront au cours de la description qui va suivre se rapportant à des modes de réalisation donnés à titre d'exemples.

La compréhension de cette description sera facilitée en se référant aux dessins joints en annexe et dans lesquels :

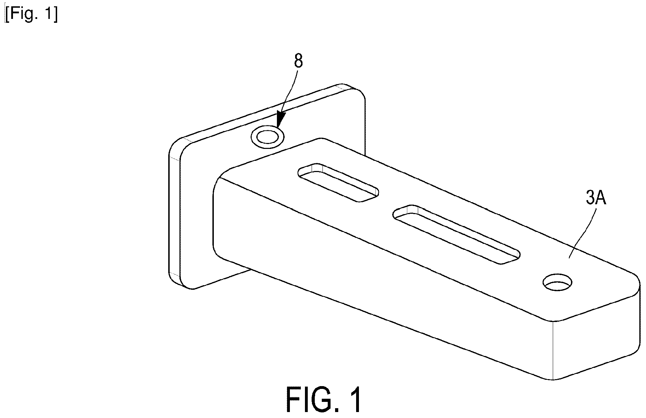

[Fig.1] est une représentation schématisée et en perspective d'un dispositif support sous forme d'une potence selon l'invention.

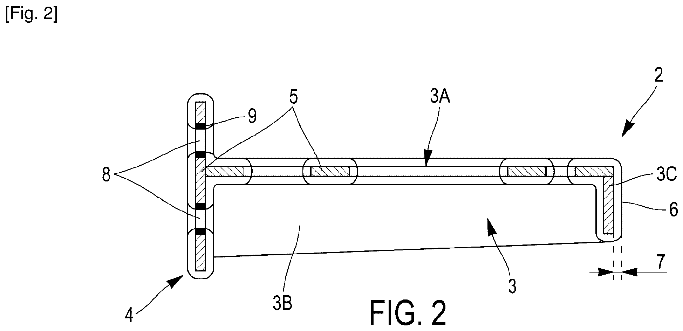

[Fig.2] est une représentation schématisée d'une coupe médiane longitudinale d'une telle potence illustrée dans la figure 1.
[Fig.3] est une représentation schématisée et en perspective d'une potence comportant au niveau du bras support un berceau défini sous forme de bossages correspondant aux moyens de fixation de câbles électriques haute tension ;
[Fig.4] est une représentation schématisée et en coupe de moyens de fixation comportant un berceau sous forme d'un cavalier ;
[Fig.5] est une représentation schématisée d'une potence comportant des moyens de fixation de câbles électriques haute tension comprenant un berceau en forme de gouttière.

En référence à ces dessins, l'invention concerne des dispositifs supports 1 de câbles électriques haute tension supérieure à 10 000 V.

Un tel dispositif support 1 se présente sous forme d'une potence 2 comportant, de manière essentielle, un bras support en acier 3 s'étendant depuis une platine de fixation en acier 4 sur laquelle il est rapporté par soudure.

Le bras support 3 se présente sous forme d'un profil, ici de section en U renversé, ayant pour particularité une certaine inertie pour supporter, sans déformation, des câbles électriques haute tension de forte section et donc d'un poids important.

Ainsi, ce bras support 3 comporte, essentiellement, deux ailes parallèles verticales 3B s'étendant en bordure longitudinale d'une paroi horizontale 3A sur laquelle sont destinées à reposer les câbles électriques haute tension. Avantageusement, ce bras support 3 est conçu par pliage d'un plat métallique, de manière à définir des arrêtes de jonction à rayon de courbure entre les deux ailes 3B et la paroi horizontale de manière à éviter tout risque de blessure d'un câble électrique haute tension.

Pour améliorer l'inertie de ce bras support 3, lesdites ailes verticales 3B sont préférentiellement de largeur croissante depuis l'extrémité libre de ce bras support 3 en direction de la platine de fixation 4.

A noter qu'à cette extrémité libre du bras support 3, une paroi d'entretoise 3C peut être solidarisée audites ailes verticales 3B et à la paroi horizontale 3A en s'étendant sensiblement parallèlement à la platine de fixation 4.

Ce dispositif support 1 est enrobé sur son l'intégralité de son pourtour par surmoulage par immersion d'une couche d'un matériau diélectrique synthétique 6. En somme, tant la platine support 4 que le bras support 3 sont intégralement recouverts, sur la totalité de leurs faces, d'une telle couche de matériau diélectrique synthétique 6.

Selon un mode d'exécution avantageux de l'invention, le matériau diélectrique synthétique définissant cette couche 6 est du polychlorure de vinyle plastifié qui, en dehors de la bonne isolation diélectrique qu'il procure, a une bonne tenue aux acides et aux bases, mais aussi aux solvants et aux hydrocarbures ou encore aux UV.

A l'état liquide, ce matériau présente également un comportement newtonien qui contribue à une parfaite gestion de l'épaisseur d'enrobage par moulage par immersion de la potence 2.

Selon l'invention cette couche d'enrobage d'un matériau diélectrique synthétique 6 comporte une épaisseur 7 définie pour résister à une tension de claquage de 10 000 V au moins.

Plus particulièrement, cette épaisseur 7 de la couche 6 est préférentiellement supérieure à 3 mm.

La platine de fixation 4 comporte au moins une, préférentiellement, plusieurs ouvertures 8 pour le passage d'un organe de fixation tel que vis ou similaire.

Au niveau d'au moins une de ces ouvertures 8 peut être ménagé un insert 9, là encore en matériau diélectrique synthétique dont l'épaisseur et/ou la résistance mécanique peuvent être choisies plus particulièrement en fonction des contraintes imprimées par un organe de fixation sur la potence 2 au niveau de cette ouverture de 8.

Ainsi, ce ou ces inserts 9, par exemple sous forme de douilles, peuvent présenter une résistance à la compression axiale définie de manière à ne pas abîmer la couche 6 en matériau diélectrique synthétique sous l'action du serrage de ces organes de fixation amenés à traverser les ouvertures 8.

De même, l'épaisseur de la paroi périphérique de tels inserts 9 en forme de douille peut également être choisie en fonction de ces contraintes, indépendamment de l'épaisseur 7 de la couche 6.

Le bras support 3 est équipé de moyens de fixation 11 d'au moins un câble électrique haute tension.

Tout particulièrement, le long du bras support 3, notamment au niveau de sa paroi horizontale 3A, peuvent être ménagées une ou plusieurs autres ouvertures 10, pour la réception de ces moyens de fixation 11.

De telles ouvertures 10 peuvent prendre différentes formes de réalisation. Ainsi elles peuvent se présenter sous forme de trou rond ou oblong et, dans ce cas, s'étendent longitudinalement ou transversalement le long de cette paroi horizontale 3A du bras support 3.

Les moyens de fixation 11 peuvent prendre la forme notamment de sangle, collier, bride ou similaires, pour solidariser sur ce bras support 3 un ou plusieurs câbles électriques haute tension.

Il convient de remarquer que de tels moyens de fixation contribuant au maintien de câbles électriques haute tension sur le bras support 3 sont moindrement sollicités en comparaison de ceux contribuant à la pose et au maintien d'une potence 2 contre un mur par exemple.

Pour autant et tout comme dans les ouvertures 8, dans au moins une de ces ouvertures 10, peut être ménagé un insert susceptible d'éviter l'altération de la couche d'enrobage 6 de matériau diélectrique synthétique.

Pour en revenir aux moyens de fixation 11, ils comportent, avantageusement, un berceau 12 pour la réception du ou des câbles électriques haute tension sur le bras support 3.

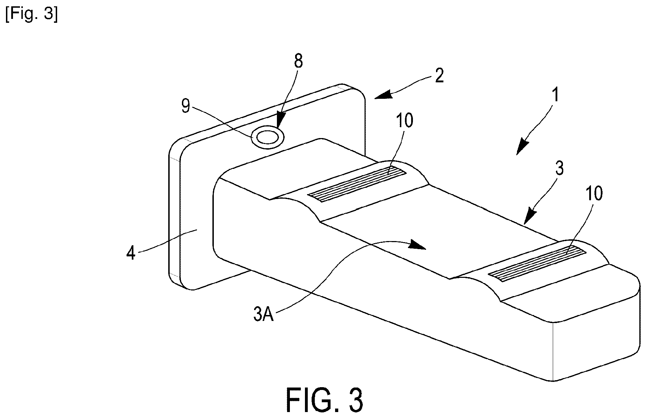

Ce berceau 12 peut emprunter différentes formes de réalisation. En particulier et comme visible dans la figure 3, il peut être défini par 2 bossages 12A ou encore par une forme concave au niveau de la paroi horizontale 3A du bras support 3.

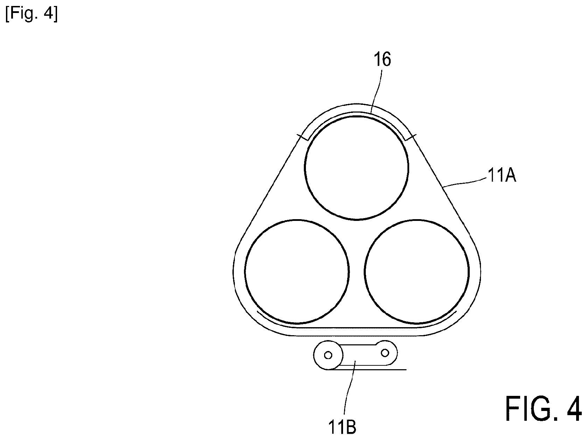

Comme visible dans la figure 4, ce berceau 12 peut être conçu par un cavalier 12B dont le maintien sur le bras support 3 est assuré par l'intermédiaire d'une sangle correspondante auxdits moyens de fixation 11.

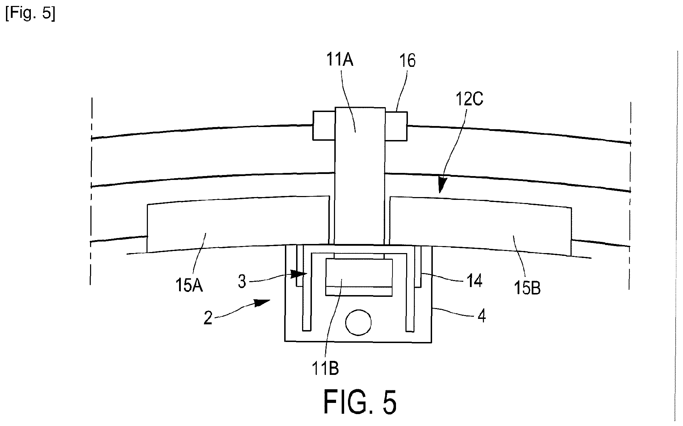

Dans la figure 5, ce berceau 12 emprunte la forme d'une gouttière 12C ouverte vers le haut pour la réception de câbles électriques haute tension. Cette gouttière 12C comporte, au niveau de sa face inférieure 13 des moyens d'emboîtement 14 sur le bras support 3. Grâce à ces moyens d'emboîtement 14, cette gouttière C peut être réglée en position le long de ce dernier.

La particularité de cette gouttière 12C consiste en ce qu'elle comporte des prolongements 15A, 15B de part et d'autre du dispositif support 1 susceptibles de guider le ou les câbles électriques haute tension de chaque côté de la potence 2. De cette manière, ce ou ces câbles électriques haute tension sont localement moins sollicités au travers de cette dernière.

De manière complémentaire et comme visible dans la figure 4, les moyens de fixation 11 peuvent éventuellement être complétés par un ou plusieurs cavaliers de répartition de charge 16 sur le ou les câbles électriques haute tension de l'action de serrage exercée par une sangle, un collier ou similaire.

Tout particulièrement et selon l'invention, les moyens de fixation 11 comportent au moins deux ouvertures 10 de forme oblongue, s'étendant transversalement sur la paroi horizontale 3A du bras support 3 de part et d'autre du berceau 12, pour le passage d'une sangle 11A, à cliquet 11B, complétant ces moyens de fixation 11.

De plus, si la sangle passe au travers des ouvertures 10 dans la paroi horizontale 3A du bras support 3, ceci pour cercler ce ou ces câbles électriques haute tension, le cliquet 11B prend avantageusement position sous le bras support 3, entre les ailes verticales 3B.

Ce cliquet 11B, souvent métallique est, ainsi, protégé sous la paroi horizontale 3A, entre les ailes verticales 3B et la platine de fixation 4, voire la paroi d'entretoise 3C. Toutes ces parois étant parfaitement isolée par enrobage d'un revêtement isolant, elles évitent qu'un arc de court-circuit viennent se reprendre sur ce cliquet 11B.

L'avantage, d'une telle solution selon l'invention consiste, en comparaison à un collier de maintien, en un moindre encombrement nécessaire pour la pose de la sangle au-dessus du ou des câbles, sangle 11A dont le cliquet de serrage 11B prend position sous la potence, sans même générer d'encombrement sous cette dernière car s'inscrivant entre les ailes verticale 3B notamment.

De manière préférentielle encore, la sange est en aramide pour sa résistance au feu. En particulier, ce matériau dans son application selon l'invention, représente un moindre pouvoir calorifique en comparaison à d'autres matériaux et ne vient pas contribuer à la propagation d'un feu qui viendrait se déclarer dans un caniveau ou une galerie abritant ces câbles électriques haute tension.

Dans le cadre du procédé d'enrobage par immersion d'un tel dispositif support 1, notamment sous forme d'une potence 2, par un matériau diélectrique synthétique, plus particulièrement par du polychlorure de vinyle, il convient de s'assurer que toute les faces du bras support 3 et de la platine de fixation 4 en acier soient parfaitement recouvertes d'une couche 6 d'enrobage d'épaisseur 7 tel que requis.

Evidemment, pour assurer cet enrobage par immersion, il convient de manipuler l'ensemble 5 en acier formé par le bras support 3 et la platine de fixation 4, notamment par l'intermédiaire de moyens de préhension adaptés.

De tels moyens de préhension se présentent avantageusement sous forme d'un crochet au bout duquel est accrochée l'ensemble en acier 5 de la potence 2, notamment au travers d'une de ses ouvertures 8.

Tout particulièrement, on engage un insert 9 au moins dans cette ouverture 8, puis on engage le crochet de manipulation dans cette dernière pour plonger et immerger l'ensemble en acier 5 dans le bain de matériau synthétique diélectrique d'enrobage. Ainsi, ce matériau d'enrobage vient recouvrir toutes les faces de l'ensemble en acier 5 en scellant, en même temps, dans l'ouverture 8 l'insert 9 et en créant, ainsi, une parfaite continuité de la couche 6 diélectrique au travers dudit insert 9 lui-même en un matériau synthétique diélectrique.

Les avantages découlant de la présente invention consistent en ce que les moyens de fixation 11, tels que définis ci-dessus, associés à une potence parfaitement isolée, apportent une très grande aisance de pose et de fixation, en toute sécurité, du ou des câbles électriques haute tension sur une telle potence. La présence du berceau assure le maintien du ou des câbles en position sans risque de blessure, ceci avant la mise en place de la sangle. Celle-ci est susceptible d'être mise en place quel que soit l'encombrement disponibles. Le serrage de la sangle intervient au moyen d'un cliquet prévu pour venir s'effacer, de manière protégée, sous la potence. La sangle, en étant conçu en aramide, répond aux contraintes mécaniques que peuvent imprimer en cas de court-circuit des câbles électriques haute tension sur de telles potence, tout en résistant efficacement au feu.

## Revendications

1. Dispositif support sous forme de potence pour câbles électriques haute tension, supérieure à 10.000V, comprenant un bras support (3) en acier comportant deux ailes parallèles verticales (3B) s'étendant en bordure longitudinale d'une paroi horizontale (3A) sur laquelle sont destinés à reposer les câbles électriques haute tension, le bras support (3) comportant encore des moyens de fixation (11) d'au moins un câble électrique haute tension comprenant :
• un berceau (12) sur la paroi horizontale (3A) du bras support (3) pour la réception du ou des câbles électriques haute tension ,
• au moins deux ouvertures (10) de forme oblongue, s'étendant transversalement sur la paroi horizontale (3A), de part et d'autre du berceau (12), le bras support (3) est rapporté par soudure sur une platine de fixation (4) en acier, lesdits moyens de fixation (11) comportant une sangle (11A), ladite sangle (11A) passant au travers desdites ouvertures (10) pour cercler le ou les câbles électriques haute tension, **caractérisé en ce que**
le dispositif est encore recouvert sur l'intégralité de son pourtour par surmoulage par immersion d'une couche (6) d'un matériau diélectrique synthétique,
ladite sangle est une sangle à cliquet (11B), et
le cliquet (11B) prenant position sous le bras support (3), entre les ailes verticales (3B).

2. Dispositif support selon la revendication 1, **caractérisé en ce que** le berceau (12) est défini par au moins deux bossages (12A) ou une forme concave au niveau de la paroi horizontale 3A à du bras support 3.

3. Dispositif support selon la revendication 1, **caractérisé en ce que** le berceau (12) est conçu par un cavalier (12B) maintenu sur le bras support (3) par l'intermédiaire de la sangle (11A).

4. Dispositif support selon la revendication 1, **caractérisé en ce que** le berceau (12) emprunte la forme d'une gouttière (12C) ouverte vers le haut pour la réception de câbles électriques haute tension.

5. Dispositif support selon la revendication 4, **caractérisé en ce que** ladite gouttière (12C) comporte, au niveau de sa face inférieure (13), des moyens d'emboîtement (14) sur le bras support (3).

6. Dispositif support selon la revendication 4 ou 5, **caractérisé en ce que** la gouttière (12C) comporte des prolongements (15A), (15B) de part et d'autre du dispositif support (1) pour guider le ou les câbles électriques haute tension de chaque côté de la potence (2).

7. Dispositif support selon l'une quelconque des revendications précédentes, **caractérisé, en ce que** les moyens de fixation (11) sont complétés par un ou plusieurs cavaliers de répartition de charge (16).

8. Dispositif support selon l'une quelconque des revendications précédentes, **caractérisé en ce que** la sangle (11A) est en aramide.

## Patentansprüche

1. Haltevorrichtung in Form eines Auslegers für elektrische Hochspannungskabel über 10000 V, umfassend einen Haltearm (3) aus Stahl, welcher zwei parallele vertikale Flügel (3B) umfasst, welche sich an einem longitudinalen Rand einer horizontalen Wand (3A) erstrecken, auf welcher die elektrischen Hochspannungskabel vorgesehen sind, aufzuliegen, wobei der Haltearm (3) ferner Befestigungsmittel (11) für wenigstens ein elektrisches Hochspannungskabel umfasst, umfassend:
- einen Bogen (12) an der horizontalen Wand (3A) des Haltearms (3) für die Aufnahme des oder der elektrischen Hochspannungskabel,
- wenigstens zwei Öffnungen (10) von länglicher Form, welche sich transversal an der horizontalen Wand (3A) beiderseits des Bogens erstrecken,
wobei der Haltearm (3) durch Schweißen an einer Befestigungsplatine (4) aus Stahl angebracht ist, wobei die Befestigungsmittel (11) einen Gurt (11A) umfassen, wobei der Gurt (11A) durch die Öffnungen (10) verläuft, um das oder die elektrischen Hochspannungskabel zu umschließen,
**dadurch gekennzeichnet, dass** die Vorrichtung ferner an der Gesamtheit ihres Umfangs durch Immersionsformen von einer Schicht (6) aus einem synthetischen dielektrischen Material umgeben ist, wobei der Gurt ein Gurt mit Ratsche (11B) ist und die Ratsche (11B) eine Position unter dem Haltearm (3) zwischen den vertikalen Flügeln (3B) einnimmt.

2. Haltevorrichtung nach Anspruch 1, **dadurch gekennzeichnet, dass** der Bogen (12) durch wenigstens zwei Vorsprünge (12A) oder eine konkave Form auf dem Niveau der horizontalen Wand 3A des Haltearms 3 definiert ist.

3. Haltevorrichtung nach Anspruch 1, **dadurch gekennzeichnet, dass** der Bogen (12) mittels eines Reiters (12B) gebildet ist, welcher an dem Haltearm (3) mittels des Gurts (11A) gehalten ist.

4. Haltevorrichtung nach Anspruch 1, **dadurch gekennzeichnet, dass** der Bogen (12) der Form einer Rinne (12C) folgt, welche nach oben offen ist für die Aufnahme von elektrischen Hochspannungskabeln.

5. Haltevorrichtung nach Anspruch 4, **dadurch gekennzeichnet, dass** die Rinne (12C) auf dem Niveau ihrer unteren Fläche (13) Mittel zum Anbringen (14) an dem Haltearm (3) umfasst.

6. Haltevorrichtung nach Anspruch 4 oder 5, **dadurch gekennzeichnet, dass** die Rinne (12C) Verlängerungen (15A), (15B) beiderseits der Haltevorrichtung (1) umfasst, um das oder die elektrischen Hochspannungskabel an jeder Seite des Auslegers (2) zu tragen.

7. Haltevorrichtung nach einem der vorhergehenden Ansprüche, **dadurch gekennzeichnet, dass** die Befestigungsmittel (11) durch einen oder mehrere Reiter zum Verteilen einer Last (16) ergänzt sind.

8. Vorrichtung nach einem der vorhergehenden Ansprüche, **dadurch gekennzeichnet, dass** der Gurt (11A) aus Aramid besteht.

## Claims

1. A support device in the form of a jib for high-voltage power cables, greater than 10,000V, comprising a steel support arm (3) comprising two vertical parallel wings (3B) extending along the longitudinal edge of a horizontal wall (3A) on which the high-voltage power cables are intended to rest, the support arm (3) further comprising means (11) for fastening at least one high-voltage power cable comprising:
• a cradle (12) on the horizontal wall (3A) of the support arm (3) for receiving the high-voltage power cable(s),
• at least two oblong-shaped openings (10), extending transversely on the horizontal wall (3A), on either side of the cradle (12),
the support arm (3) is mounted by welding on a steel fastening plate (4), said fastening means (11) comprising a strap (11A),
said strap (11A) passing through said openings (10) to surround the high-voltage power cable(s), **characterised in that** the device is further covered over its entire periphery by immersion overmoulding with a layer (6) of synthetic dielectric material, said strap is a strap with a ratchet (11B), and
the ratchet (11B) taking position under the support arm (3), between the vertical wings (3B).

2. The support device according to claim 1, **characterised in that** the cradle (12) is defined by at least two bosses (12A) or a concave shape at the horizontal wall 3A of the support arm 3.

3. The support device according to claim 1, **characterised in that** the cradle (12) is formed by a cable clip (12B) held on the support arm (3) via the strap (11A).

4. The support device according to claim 1, **characterised in that** the cradle (12) takes the form of a trough (12C) open at the top for receiving high-voltage power cables.

5. The support device according to claim 4, **characterised in that** said trough (12C) comprises, on its underside (13), means for interlocking (14) with the support arm (3).

6. The support device according to claim 4 or 5, **characterised in that** the trough (12C) comprises extensions (15A), (15B) on either side of the support device (1) to guide the high-voltage power cable(s) on each side of the jib (2).

7. The support device according to any one of the preceding claims, **characterised in that** the fastening means (11) are supplemented by one or more load-distributing cable clips (16).

8. The support device according to any one of the preceding claims, **characterised in that** the strap (11A) is made of aramid.
